# FASCICULE DE BREVET EUROPEEN

(11) **EP 2 312 965 B1**
(45) Date de publication et mention de la délivrance du brevet: **12.12.2018**
(21) Numéro de dépôt: 09737013.4
(22) Date de dépôt: 13.08.2009
(51) Int. Cl.: A45C 13/02, A45C 7/00, A45C 11/00, G06F 1/16, A45C 3/02, A45C 13/10

(54) **STRUCTURE POUR LE TRANSPORT ET L'UTILISATION D'UN EQUIPEMENT PORTABLE COMPRENANT NOTAMMENT DES ELEMENTS INTERCONNECTABLES PAR DES LIAISONS FILAIRES, TEL QU'UN EQUIPEMENT MULTIMEDIA PORTABLE**
STRUKTUR ZUM TRANSPORT UND GEBRAUCH VON TRAGBAREN GERÄTEN MIT INSBESONDERE ELEMENTEN, DIE UNTER VERWENDUNG VON DRAHTVERBINDUNGEN MITEINANDER VERBUNDEN WERDEN KÖNNEN, WIE TRAGBARE MULTIMEDIENGERÄTE
STRUCTURE FOR TRANSPORTING AND USING PORTABLE EQUIPMENT COMPRISING IN PARTICULAR ELEMENTS THAT CAN BE INTERCONNECTED USING WIRED CONNECTIONS, SUCH AS PORTABLE MULTIMEDIA EQUIPMENT

(30) Priorité: 19.08.2008 FR 0855619; 14.11.2008 US 114724 P; 12.08.2009 FR 0955636
(43) Date de publication de la demande: 27.04.2011
(73) Titulaire: Klein, Thierry, 59830 Bachy (FR)
(72) Inventeur: Klein, Thierry, 59830 Bachy (FR)
(74) Mandataire: Matkowska, Franck
(86) Numéro de dépôt international: PCT/FR2009/001005
(87) Numéro de publication internationale: WO 2010/020716

(56) Documents cités:
- DE-A1- 19 801 397
- FR-A1- 2 838 312
- US-A1- 2007 257 455

## Description

L'invention se rapporte à une nouvelle structure qui est adaptée pour le transport et l'utilisation d'un équipement portable, tel que par exemple équipement multimédia portable, et plus particulièrement, mais non exclusivement, d'un équipement portable comprenant des éléments interconnectables par des liaisons filaires.

### DOMAINE TECHNIQUE DE L'INVENTION

La présente invention se rapporte au domaine du transport et de l'utilisation d'équipements portables comprenant des éléments, qui sont de préférence , mais non nécessairement, interconnectés par des liaisons filaires permettant de transporter de l'information ou de l'énergie d'un élément à l'autre, tels que notamment des câbles de connexion électriquement conducteurs, des fibres optiques, etc... Plus particulièrement, l'invention concerne le transport et l'utilisation d'équipements multimédia portables, et plus particulièrement d'éléments multimédia interconnectés permettant la diffusion et le contrôle d'informations audiovisuelles.

### ETAT DE LA TECHNIQUE ANTERIEURE

Dans le cadre de conférence, dans les domaines des affaires, de l'enseignement, ou encore de la formation, des moyens d'affichage sont couramment utilisés afin de rendre l'objet de l'exposé qui est soutenu plus compréhensible, et d'en améliorer l'intérêt.

Ces moyens d'affichage peuvent être compris dans la salle audiovisuelle, où a lieu la conférence, et correspondent souvent à un projecteur et du matériel audio tel qu'un microphone et des hauts parleurs.

Ces moyens d'affichage peuvent encore se rapporter à des appareils de projection portables comprenant des hauts parleurs, utilisés par le conférencier.

Dans ces deux cas, le conférencier doit prendre le temps de réaliser l'installation de son dispositif, en réalisant des actions diverses telles que : enlever l'appareil de projection de son sac, retirer le cache de l'objectif, raccorder son ordinateur portable à cet équipement, régler la hauteur de l'appareil de projection, brancher l'appareil de projection et son ordinateur portable à une alimentation électrique, et enfin actionner la mise en marche de ces deux éléments.

Un problème se pose alors, pour le conférencier de disposer d'un équipement lui permettant de bénéficier d'un mécanisme simple et flexible répondant à ses besoins dans la configuration et l'interconnexion des éléments multimédias, afin de pouvoir réaliser son exposé dans de bonnes conditions.

Pour pallier ces inconvénients, on connaît dans l'art antérieur le document de brevet français FR 2,827,729 décrivant un équipement audiovisuel portable comprenant des éléments multimédias permettant la diffusion d'images et/ou de vidéos, et de documents audio. Cet équipement audiovisuel portable comprend une valise séparée en étagères dans lesquelles sont compris un ordinateur portable, un appareil de projection, du matériel pour la diffusion de document audio, un microphone et des transformateurs reliés à des câbles pour l'alimentation électrique.

L'inconvénient de cette solution réside dans le fait que cet équipement propose une structure rigide, la valise, qui ne permet pas de remplacer un élément multimédia défectueux par un élément similaire mais de taille ou de forme différente. Cet équipement étant composé d'éléments multimédias qui appartiennent à un domaine technique qui évolue rapidement peut devenir rapidement obsolète.

L'amélioration d'une telle solution, consiste à utiliser des éléments multimédias de très grande qualité qui seraient susceptibles d'être garant d'une plus grande longévité de cet équipement dans le temps.

Mais de tels éléments sont chers et engendreraient une augmentation des coûts de fabrication d'un tel équipement.

De plus, dans ce document, l'agencement en étagère des différents éléments composant cet équipement ne permet pas au conférencier d'avoir un accès immédiat, dès l'ouverture de l'équipement à tous les éléments.

En effet, les éléments placés dans des niveaux inférieurs nécessitent une extraction qui rallonge la durée d'installation de cet équipement par le conférencier.

Il est par ailleurs usuel de transporter un équipement multimédia, tel qu'un ordinateur portable, dans une sacoche de transport. Ce type de sacoche de transport comporte deux compartiments ouverts et rabattables l'un contre l'autre, en sorte de former un logement fermé unique dans lequel est placé l'équipement multimédia. Le plus souvent, les deux compartiments sont solidarisés entre eux en position fermée au moyen d'un système de fermeture, qui est par exemple de type fermeture à glissière.

Si l'on cherche à utiliser ce type de sacoche pour transporter plusieurs éléments multimédia interconnectables, on est contraint de loger une partie des éléments multimédia dans l'un des compartiments ouverts et l'autre partie dans l'autre compartiment ouvert. Lorsqu'on referme la sacoche en rabattant les deux compartiments l'un contre l'autre, les éléments multimédia des deux compartiments sont en contact direct les uns avec les autres. Ainsi, avec ce type de sacoche de transport, en cas de chocs sur la sacoche, par exemple lors du transport, il y a de manière préjudiciable un risque important de détérioration des éléments multimédias qui peuvent s'entrechoquer. Cette solution de transport n'est donc pas satisfaisante. Une autre structure pour le transport et l'utilisation d'un équipement portable est encore connue dans l'art antérieur, voir le document US 2007/257455 A1.

### EXPOSE DE L'INVENTION

L'invention vise à améliorer le transport et l'utilisation d'un équipement portable comportant plusieurs des éléments, qui, en fonctionnement sont de préférence, mais non nécessairement, interconnectés par des liaisons filaires permettant notamment de transporter de l'information ou de l'énergie d'un élément à l'autre, tel que par exemple des câbles de connexion électriquement conducteurs, des fibres optiques, et plus particulièrement le transport et l'utilisation d'un équipement portable de diffusion d'informations multimédia.

L'invention propose une nouvelle structure, qui permet de transporter un tel équipement avec une sécurité améliorée contre les chocs, et qui permet de faciliter l'utilisation de l'équipement.

Plus précisément, l'invention a pour objet une structure pour le transport et l'utilisation d'un équipement portable équipement portable comportant plusieurs éléments, ladite structure comportant :
- deux plateaux, qui comportent chacun un fond destiné à servir de support à un ou plusieurs éléments de l'équipement, chaque fond comportant une face externe et une face interne qui est destinée à être orientée vers le ou lesdits éléments,
- une couverture,
- des moyens de liaison de la couverture avec lesdits plateaux,
ladite structure étant configurable dans au moins trois configurations, à savoir :
- une configuration, dite de transport, dans laquelle la couverture est solidaire des deux plateaux et couvre chaque face interne de chaque plateau, de manière à former, avec au moins chaque face interne de chaque plateau, au moins deux logements qui sont aptes à contenir les éléments dudit équipement, et qui sont en position rabattue l'un vers l'autre, avec les fonds des plateaux positionnés en face l'un de l'autre,
- une configuration, dite intermédiaire, dans laquelle la couverture est solidaire des deux plateaux et forme avec chaque plateau les deux mêmes logements que pour la configuration de transport, mais dans laquelle les plateaux sont positionnés l'un par rapport à l'autre de telle sorte que les faces externes des fonds des plateaux peuvent être posées sur un même support plan, et
- une configuration, dite d'utilisation, dans laquelle les plateaux sont dans la même position que pour la configuration intermédiaire, et dans laquelle la couverture est désolidarisée au moins partiellement des deux plateaux, de telle sorte que les faces internes des fonds des plateaux sont découvertes et directement accessibles,

La structure permet en outre, dans les trois configurations, le passage d'une ou plusieurs liaisons filaires d'un plateau à l'autre pour la connexion d'un ou plusieurs éléments supportés par la face interne du fond d'un plateau avec un ou plusieurs autres éléments supportés par la face interne du fond de l'autre plateau.

De manière facultative, la structure de l'invention peut comporter les caractéristiques techniques additionnelles suivantes, prises isolément ou en combinaison les unes avec les autres :
- les faces externes des fonds des plateaux sont en regard l'une de l'autre lorsque la structure est en configuration de transport ;
- les deux plateaux sont mobiles en rotation autour d'un axe et le passage de la configuration de transport à la configuration intermédiaire, et réciproquement, est obtenu par simple rotation des deux plateaux autour dudit axe, sans détacher la couverture ;
- ladite couverture relie les deux plateaux entre eux dans la configuration de transport et dans la configuration intermédiaire, et permet la rotation des deux plateaux autour dudit axe, afin de permettre le passage de la configuration de transport à la configuration intermédiaire, et réciproquement, sans détacher la couverture ;
- les plateaux sont reliés par un moyen de liaison souple dans les trois configurations ;
- ledit moyen de liaison souple permet, dans la configuration d'utilisation, d'ajuster l'orientation dans un même plan des fonds des deux plateaux l'un par rapport à l'autre ;
- ledit moyen de liaison souple permet un guidage d'une ou plusieurs liaisons filaires d'un plateau à l'autre ;
- ledit moyen de liaison souple permet un guidage d'une ou plusieurs liaisons filaires d'un plateau à l'autre, de telle sorte qu'une fois le ou les éléments d'un plateau connectés, au moyen de ladite ou desdites liaisons filaires, avec un ou plusieurs éléments de l'autre plateau, lesdits éléments restent connectés entre eux lors du passage de la configuration de transport à la configuration intermédiaire et réciproquement, ainsi que lors du passage de la configuration intermédiaire à la configuration d'utilisation, et réciproquement ;
- le moyen de liaison souple forme une gaine souple dont les deux extrémités sont ouvertes et qui est apte à être traversée par une ou plusieurs liaisons filaires ;
- chaque plateau comporte en outre un ou plusieurs rabats latéraux sur la périphérie de son fond, les logements de la structure dans la configuration de transport et dans la configuration intermédiaire étant délimités par la couverture, la face interne du fond de chaque plateau et les rabats latéraux de chaque plateau ;
- un plateau comporte un rabat latéral, qui est positionné en regard d'un rabat latéral de l'autre plateau (2) lorsque la structure est dans la configuration intermédiaire et dans la configuration d'utilisation, et chacun desdits rabats comporte une découpe permettant le passage d'au moins une liaison filaire d'un plateau à l'autre dans les trois configurations de la structure ;
- au moins un des rabats latéraux d'un des plateaux comporte deux parties : une partie fixe comportant une échancrure prévue pour un élément de type moyen de projection vidéo, et une partie formant un rabat mobile qui permet d'obturer l'échancrure dans les configurations de transport et intermédiaire, et de libérer l'échancrure dans la configuration d'utilisation ;
- chaque plateau comporte en outre un ou plusieurs rabats latéraux sur la périphérie de son fond, lesdits logements de la structure dans la configuration de transport et dans la configuration intermédiaire étant délimités par la couverture, la face interne du fond de chaque plateau et les rabats latéraux de chaque plateau ; ledit moyen de liaison souple est disposé par dessus deux rabats latéraux des deux plateaux, qui sont en regard l'un de l'autre lorsque la structure est dans la configuration intermédiaire et dans la configuration d'utilisation, et permet ainsi le guidage d'une ou plusieurs liaisons filaires par dessus lesdits rabats latéraux ;
- les deux extrémités du moyen de liaison souple sont respectivement fixées sur le bord supérieur des deux rabats latéraux qui sont en regard l'un de l'autre en configuration intermédiaire et en configuration d'utilisation ;
- chaque plateau comporte des moyens de fixation permettant d'attacher de manière amovible des éléments d'un équipement sur la face interne du fond du plateau ;
- les moyens de fixation sont repositionnables, et de préférence sont de type bouclettes ou crochets ;
- les moyens de fixation comportent des bandes ayant des capacités d'adhésion différentes ; lesdites bandes sont par exemple auto-agrippantes.
- la structure comporte une poignée de préhension qui est fixée sur la couverture ou sur au moins un des plateaux ;
- la couverture peut être réalisée dans un matériau souple ;
- la structure comporte une ou plusieurs des poches qui sont aptes à être attachées de manière amovible sur la face interne du fond de chaque plateau, chaque poche amovible comportant au moins une ouverture sur le dessous pour le passage d'une ou plusieurs liaisons filaires et au moins une ouverture sur le dessus pour l'introduction d'un élément de l'équipement dans la poche ;
- le fond de l'un des deux plateaux est pourvu de moyens de levage intégrés ;
- les moyens de levage intégrés comportent une poche gonflable appliquée contre la face externe du fond du plateau ;
- les moyens de levage comportent une poire de gonflage reliée à la poche par un tuyau qui est passé à travers le fond du plateau ;
- les plateaux peuvent être constitués d'un matériau rigide ;
- les moyens de liaison permettant de solidariser la couverture aux plateaux comportent une ou plusieurs fermetures à glissière. ;
- les moyens de liaison permettant de solidariser la couverture aux plateaux comportent une ou plusieurs fermetures avec moyens auto-agrippants.
- la structure peut comporter des tenseurs élastiques qui permettent d'attacher à la face interne du fond des plateaux les éléments d'un équipement et/ou les liaisons filaires reliant les éléments d'un équipement.

L'invention a également pour objet un ensemble comportant la structure susvisée et un équipement portable comportant au moins deux éléments, un ou plusieurs éléments de l'équipement étant positionnés dans un des logements de la structure en configuration de transport ou intermédiaire, et un ou plusieurs autres éléments de l'équipement étant positionnés dans l'autre logement de la structure en configuration de transport ou intermédiaire.

Plus particulièrement, dans une variante particulière de réalisation, au moins certains des éléments de l'équipement sont interconnectables au moyen d'une ou plusieurs liaisons filaires.

Plus particulièrement encore, un ou plusieurs éléments d'un logement sont connectés, au moyen d'une ou plusieurs liaisons filaires, avec un ou plusieurs éléments de l'autre logement, lesdits éléments restant connectés entre eux lors du passage de la configuration de transport à la configuration intermédiaire et réciproquement, ainsi que lors du passage de la configuration intermédiaire à la configuration d'utilisation, et réciproquement.

Selon une caractéristique optionnelle, lorsque la structure comporte le moyen de liaison souple susvisé, la ou les liaisons filaires passent d'un logement à l'autre en étant guidés par le moyen de liaison souple de la structure.

L'équipement est par exemple un équipement multimédia portable, et plus particulièrement peu comporter un vidéoprojecteur contenu dans un logement de la structure et un terminal contenu dans l'autre logement de la structure. L'équipement peut également comporter une imprimante et un terminal.

Les liaisons filaires comportent par exemple des câbles de connexion électriquement conducteurs.

Selon une caractéristique optionnelle, l'ensemble peut comporter un moyen de distribution d'énergie, qui comprend d'une part plusieurs connecteurs aptes à être connectés respectivement à des éléments de l'équipement qui nécessitent de l'énergie pour leur fonctionnement, et d'autre part une prise d'alimentation qui est raccordée auxdits connecteurs, et qui est apte à être connectée à une source d'énergie de manière à alimenter en énergie tous les connecteurs, ladite source pouvant être positionnée à l'intérieur ou à l'extérieur de la structure.

Plus particulièrement, le moyen de distribution d'énergie comprend par exemple un câble d'alimentation électrique, dont une extrémité est raccordée électriquement à la prise d'alimentation, et qui comprend plusieurs brins dont les extrémités sont raccordées électriquement respectivement auxdits connecteurs.

### BREVE DESCRIPTION DES FIGURES

D'autres caractéristiques et avantages de l'invention ressortiront à la lecture de la description détaillée qui suit de variantes particulières de réalisation, laquelle description est faite, à titre d'exemple non limitatif et non exhaustif de l'invention, et en référence aux dessins annexés parmi lesquels :
- la figure 1 est une vue d'un ensemble constitué d'un équipement portable multimédia logé dans une structure qui est conforme à une variante particulière de réalisation de l'invention, ladite structure étant dans la configuration d'utilisation ;
- la figure 2 est une vue de l'ensemble (équipement /structure), avec la structure dans la configuration de transport,
- la figure 3 est une vue de dessous du fond d'un des plateaux de la structure de la figure 1 ;
- la figure 4 est une vue de l'ensemble (équipement /structure) avec la structure dans la configuration intermédiaire ;
- la figure 5 est une autre vue de l'ensemble (équipement /structure) avec la structure dans la configuration intermédiaire ;
- la figure 6A illustre une poche amovible ouverte selon l'invention ;
- la figure 6B illustre une poche amovible fermée selon l'invention, et

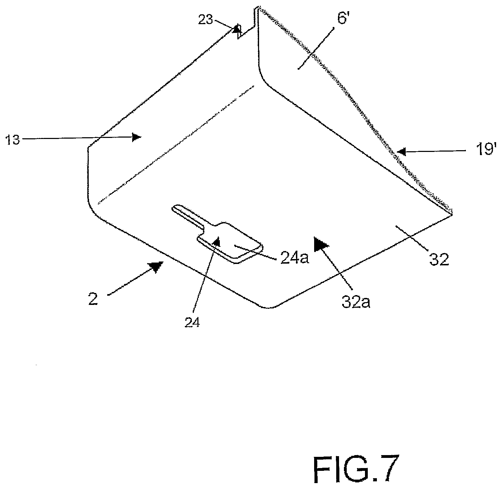

- la figure 7 est une vue de dessous d'un autre exemple de réalisation d'un des plateaux de la structure de la figure 1 ;
- la figure 8 représente un exemple de réalisation d'un câble d'alimentation électrique permettant la distribution d'énergie électrique et comportant une prise d'alimentation unique reliée à plusieurs connecteurs d'extrémité ;
- la figure 9 est une vue schématique de dessus de l'ensemble (équipement /structure) de la figure 1, en configuration d'utilisation, ladite vue de dessus permettant de montrer l'interconnexion de certains éléments de l'équipement et l'alimentation en énergie électrique de certains éléments de l'équipement au moyen du câble d'alimentation de la figure 8.

Pour plus de clarté, les éléments identiques ou similaires sont repérés par des signes de référence identiques sur l'ensemble des figures.

### DESCRIPTION DETAILLEE

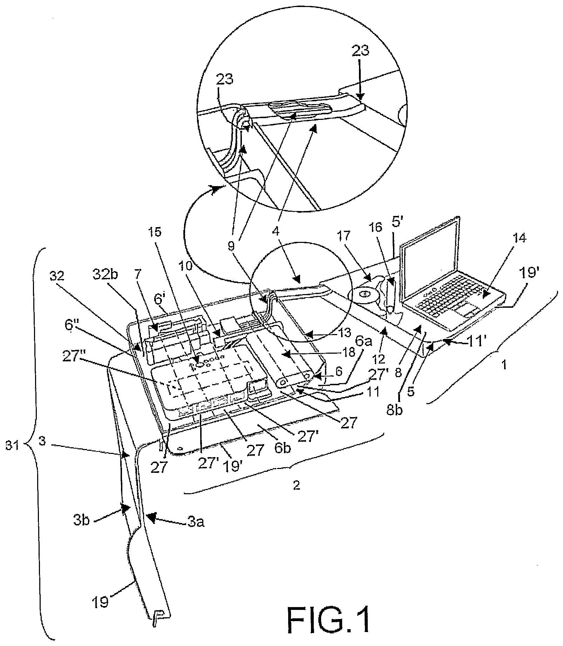

La figure 1 illustre un ensemble 31 constitué d'un équipement multimédia portable qui est logé dans une structure de l'invention permettant le transport et l'utilisation de cet équipement.

L'équipement multimédia portable comporte des moyens de diffusion informatique/audio/vidéo sous la forme d'éléments interconnectés au moyen de câbles 9 de connexion électrique.

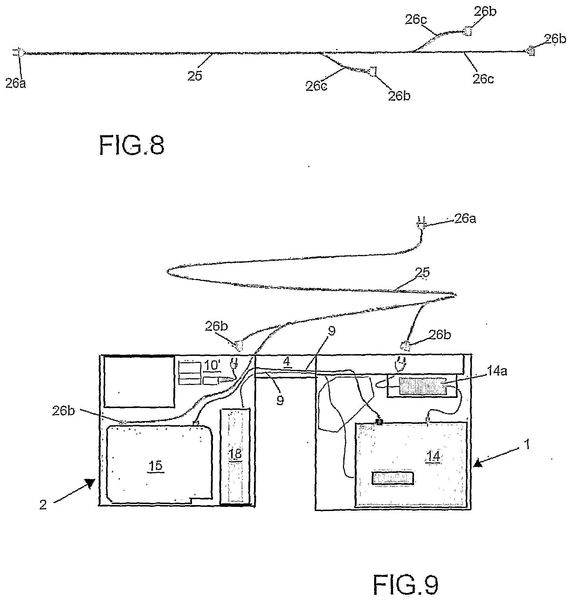

Plus particulièrement, dans la réalisation illustrée, ces moyens de diffusion comportent, de manière non exhaustive et non limitative, un dispositif de numérisation (scanneur), un vidéoprojecteur 15, des haut-parleurs 18, un micro-visualisateur 7, un tableau interactif mobile 17,16, un chargeur de piles, un système de microphone sans fil (base et micro-cravate), une tablette numérique nomade 10, une multiprise, un terminal portable 14 (unité centrale informatique) avec son transformateur de courant 14a (figure 9).

Ce terminal 14 est constitué par exemple par un ordinateur portable ou ultra portable.

Dans une autre variante, l'équipement pourrait comporter également une imprimante, par exemple à la place du vidéoprojecteur 15.

La structure dans laquelle sont logés les éléments de l'équipement comporte :
- deux plateaux 1,2,
- une couverture 3,
- des moyens de liaison 19,19' de la couverture 3 avec lesdits plateaux 1,2.

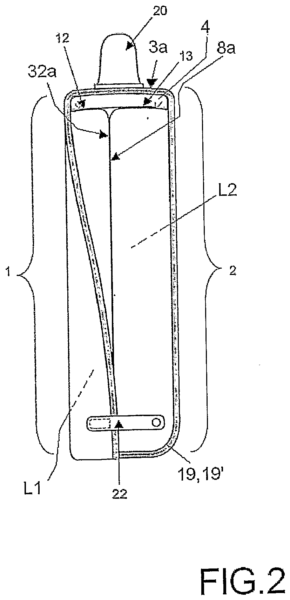

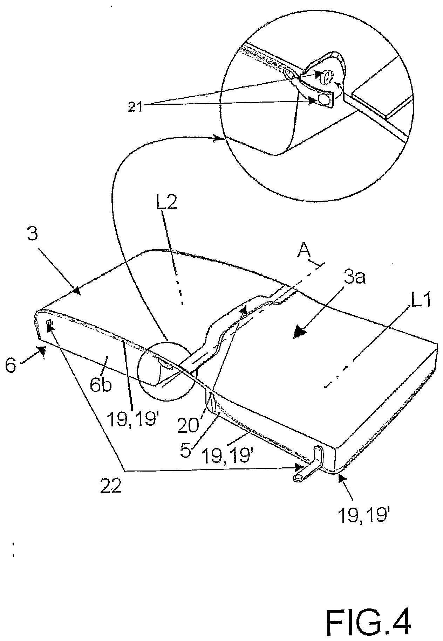

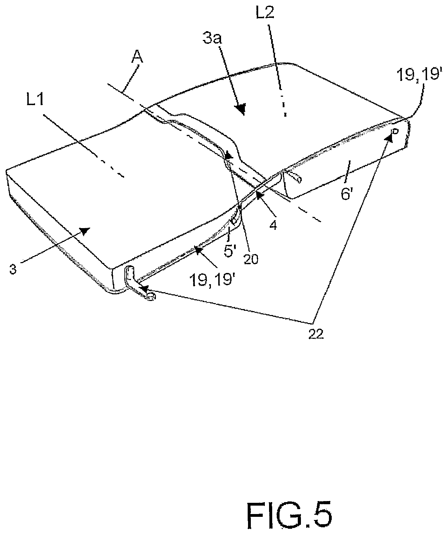

Cette structure est configurable dans au moins trois configurations : une configuration d'utilisation illustrée sur la figure 1 ; une configuration de transport illustrée sur la figure 2 ; une configuration intermédiaire [entre la configuration d'utilisation et la configuration de transport] illustrée sur les figures 4 et 5.

En référence à la figure 1, chaque plateau 1 (respectivement 2) de la structure comporte un fond 8 (respectivement 32) dont la face interne 8b (respectivement 32b) sert de support aux éléments de l'équipement multimédia. Dans la variante de réalisation illustrée, le terminal 14, le tableau interactif 16, 17 et une multiprise de l'équipement multimédia sont supportés par la face interne 8b du fond 8 du plateau 1, et sont de préférence attachés de manière amovible à cette face interne 8b ; le micro-visualisateur 7, le microphone, le vidéoprojecteur 15, le chargeur de pile, l'ardoise numérique nomade 10 et les hauts parleurs 18 de l'équipement multimédia sont supportés par la face interne 32b du fond 32 du plateau 2, et sont de préférence attachés de manière amovible à cette face interne 32b.

Certains éléments de ce plateau 2, tels que le vidéo projecteur, ou encore le chargeur de pile sont connectés, au moyen de câbles 9, à la multiprise du premier plateau 1. Pour la mise en fonctionnement de cet équipement, il suffit de raccorder le câble d'alimentation de la multiprise à une alimentation électrique afin d'alimenter électriquement tous les éléments de l'équipement qui sont pré-connectés à la multiprise.

Dans la variante de réalisation illustrée, le plateau 1 comporte également, sur la périphérie de son fond 8, des rabats latéraux 12, 5, 5', qui sont rigides et fixes par rapport au fond 8. Le plateau 2 comporte sur la périphérie de son fond 32, des rabats latéraux 13, 6', 6" qui sont rigides et fixes par rapport au fond 32, et un rabat latéral 6 en deux parties 6a, 6b. La hauteur du rabat latéral 6" décroît sensiblement linéairement depuis le rabat latéral 6' jusqu'à la partie fixe 6a du rabat latéral 6.

Plus particulièrement, la partie 6a du rabat 6 est rigide et fixe par rapport au fond 32, et elle comporte une échancrure 11 permettant la diffusion du faisceau de projection émanant du vidéoprojecteur 15. L'autre partie 6b forme un rabat mobile qui permet d'obturer l'échancrure 11 dans la configuration de transport et dans la configuration intermédiaire, et de libérer l'échancrure 11 dans la configuration d'utilisation. Le rabat 5 du plateau 1 comporte également une échancrure 11' afin de faciliter l'accès au terminal 14 et en particulier au clavier de ce terminal. Dans un autre mode de réalisation, l'une ou l'autre de ces échancrures 11, 11' peut ne pas être prévue.

De préférence, certains éléments de l'équipement multimédia sont pré-connectés entre eux par l'intermédiaire des câbles 9, ce qui permet ainsi une installation rapide sans perte de temps pour le raccordement spécifique de ces éléments entre eux.

Ces éléments restent interconnectés quelle que soit la configuration (transport, intermédiaire ou utilisation) de la structure. L'alimentation électrique de certains éléments est assurée par exemple par le déploiement et le branchement d'un câble électrique unique de l'équipement, tel que le câble 25 de la figure 8, à une borne d'alimentation électrique, lorsque la structure contenant cet équipement est en configuration d'utilisation.

En référence à la figure 8, ce câble d'alimentation 25 comporte à une extrémité une prise d'alimentation 26a, et à une autre extrémité plusieurs brins 26c se terminant chacune par un connecteur 26b. Les connecteurs 26b peuvent présenter des structures identiques ou présenter des structures différentes. La prise d'alimentation 26a est raccordée électriquement à tous les connecteurs 26c, ce qui permet une distribution de l'énergie électrique depuis ladite prise 26a vers l'ensemble de ces connecteurs 26b.

En fonctionnement (figure 9), les connecteurs 26b sont branchés respectivement à certains éléments de l'équipement, à savoir dans l'exemple particulier de la figure 9, au vidéoprojecteur 15, au chargeur de piles 10', et au transformateur de courant 14a du terminal 14. Il suffit ensuite de brancher la prise d'alimentation 26a sur une source d'énergie, tel que par exemple le secteur, pour alimenter en parallèle tous les équipements connectés au câble d'alimentation 25. Ladite source d'énergie peut être extérieure à la structure de l'invention ou être logée dans la structure de l'invention.

Dans la variante de réalisation illustrée sur les figures, les câbles 9 passent d'un plateau 1 à l'autre 2 à travers un moyen de liaison souple 4, qui relie les deux plateaux 1, 2, quelle que soit la configuration de la structure.

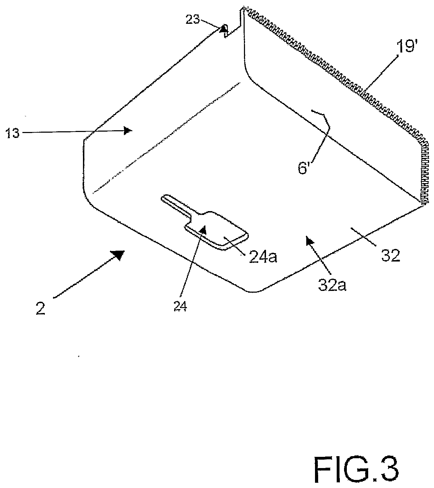

Dans la variante de réalisation illustrée, le moyen de liaison souple 4 forme une gaine souple tubulaire dont les deux extrémités sont ouvertes. Les câbles 9 sont passés à travers cette gaine souple. Plus particulièrement, les deux rabats latéraux 12, 13, qui sont situés en regard l'un de l'autre lorsque la structure est en configuration d'utilisation (figure 1), comportent chacun une découpe 23 au niveau de leur bord supérieur (figure 3) pour le passage du moyen de liaison souple 4, et de ce fait pour le passage des câbles 9 d'un plateau 1 à l'autre 2. Le moyen de liaison souple 4 est fixé à ses deux extrémités aux rabats 12,13 au niveau desdites découpes 23.

Plus particulièrement, ce moyen de liaison souple 4 permet aux câbles de circuler d'un plateau 1 à l'autre 2 sans qu'aucune tension ne soit exercée sur ces câbles, quelle que soit la configuration (utilisation/ /intermédiaire/transport) de la structure contenant l'équipement, et quelle que soit l'orientation des plateaux 1, 2 l'un par rapport à l'autre dans un même plan en configuration d'utilisation.

La couverture 3 est par exemple réalisée dans un matériau souple.

Dans la variante particulière illustrée sur la figure 1, l'une des extrémités de la couverture 3 est fixée de manière définitive, par une liaison inamovible, au fond 32 du plateau 2, au niveau du rabat latéral 6". Cette liaison inamovible est réalisée par tout moyen approprié, et est par exemple obtenue par couture de la couverture sur le fond 32.

Comme l'illustrent les figures 1, 3, 4 et 5, les deux plateaux 1, 2 comprennent des moyens de liaison 19' et la couverture 3 comporte sur sa périphérie des moyens de liaison 19 qui sont aptes à coopérer avec lesdits moyens de liaison 19' pour solidariser temporairement la couverture 3 avec les plateaux 1,2 dans la configuration intermédiaire (figure 4) et dans la configuration de transport (figure 2) de la structure.

Ces moyens de liaison 19, 19' sont constitués par exemple par des fermetures à glissière, ou encore des bandes auto-agrippantes ayant une structure crochets/bouclettes de type Velcro®.

Lorsque la structure est dans la configuration d'utilisation de la figure 1, les moyens de liaison temporaire 19,19' sont désolidarisés et la couverture 3 est ainsi complètement désolidarisée du plateau 1 et partiellement désolidarisée du plateau 2, en étant liée uniquement par une des ses extrémités au fond 32 du plateau 2. Dans cette configuration, les faces internes 8b, 32b des fonds 8, 32 des plateaux 1, 2 sont totalement découvertes et directement accessibles, et l'accessibilité au contenu des deux plateaux 1, 2 est ainsi maximale.

Dans cette configuration d'utilisation, les deux plateaux 1, 2 sont reliés uniquement par la liaison souple 4, et sont positionnés l'un par rapport à l'autre de telle sorte que les faces externes 8a, 32a des fonds 8, 32 des plateaux 1,2 sont sensiblement coplanaires, c'est-à-dire peuvent être posées sur un même support plan, tel que par exemple une table.

Dans cette configuration d'utilisation (figure 1), le moyen de liaison souple 4 relie les deux plateaux 1,2 en sorte de les rendre facilement orientables dans un même plan, sans que cela gêne la connexion entre ces différents éléments, et de façon à les positionner au mieux des besoins de l'utilisateur.

En outre, les câbles 9 reliant les éléments d'un plateau 1 à l'autre 2 sont guidés par ce moyen de liaison souple 4 et passent au dessus des rabats latéraux 12,13 qui sont en regard l'un de l'autre, sans subir de tension. Ainsi, l'utilisateur peut modifier l'orientation d'un plateau par rapport à l'autre, sans déconnecter les éléments de l'équipement.

Pour passer de la configuration d'utilisation de la figure 1 à la configuration intermédiaire de la figure 4 ou 5, il suffit à l'utilisateur de rabattre la couverture 3 au dessus des plateaux 1, 2, de manière à couvrir totalement les faces internes 8b, 32b des fonds 8, 32 des deux plateaux 1, 2, et de solidariser la couverture 3 avec les rabats latéraux des plateaux 1,2 à l'aide des moyens de liaison 19,19'. Dans cette configuration intermédiaire, la couverture 3 forme, avec chaque face interne 8b, 32b de chaque plateau 1,2 et avec les rabats latéraux 12, 5, 5', 13, 6, 6',6" de chaque plateau, deux logements distincts L1, L2 qui contiennent chacun une partie des éléments dudit équipement. Ces deux logements L1, L2 forment deux sacoches et sont disposés dans le même plan (plan supportant les deux plateaux 1,2). Le logement L1 contient les éléments précités de l'équipement multimédia supportés par le plateau 1, et le logement L2 contient les éléments précités de l'équipement multimédia supportés par le plateau 2.

Ces deux logements L1 et L2 sont fermés, mais permettent, grâce à leurs découpes respectives 23 dans les rabats 12 et 13, le passage des câbles 9 d'un logement L1 à l'autre L2, avec un guidage des câbles entre les deux logements L1, L2 au moyen de la liaison souple 4. Ainsi, le passage de la configuration d'utilisation à la configuration intermédiaire (et vice versa) peut avantageusement être réalisé sans déconnecter les éléments de l'équipement.

Pour passer de la configuration intermédiaire de la figure 4 ou de la figure 5 à la configuration de transport de la figure 2, il suffit à l'utilisateur de faire pivoter en rotation les deux plateaux 1, 2 autour d'un axe A, sans détacher la couverture 3, et de manière à rabattre les deux logements L1, L2 l'un vers l'autre, avec les fonds 8, 32 des plateaux 1,2 positionnés en face l'un de l'autre.

.Plus particulièrement, dans la variante de réalisation illustrée, lorsque les deux logements L1, L2 sont rabattus l'un vers l'autre, les fonds 8, 32 des plateaux 1,2 sont positionnés en face l'un de l'autre, de telle sorte que les deux faces externes 8a, 32a des fond 8, 32 des plateaux 1,2 se trouvent en regard l'une de l'autre, et de préférence l'une contre l'autre tel qu'illustré sur la figure 2. Dans cette configuration particulière, les fonds 8, 32 des plateaux permettent d'éviter un contact direct entre les éléments contenus dans un logement L1 et les éléments contenus dans l'autre logement L2. Dans cette configuration particulière, les deux faces externes 8a, 32a des fond 8, 32 des plateaux 1,2 en regard l'une de l'autre, ne sont pas nécessairement au contact l'une contre l'autre, mais peuvent être proches et distantes l'une de l'autre, la distance séparant les fonds 8, 32 des plateaux étant dans ce cas faible et inférieure à la plus grande dimension des plateaux.

Dans la variante illustrée sur la figure 2, les deux fonds 8, 32 ont sensiblement la même géométrie et les mêmes dimensions. Cette caractéristique n'est toutefois pas limitative de l'invention. Dans une autre variante de réalisation, la géométrie et/ou les dimensions du fond 8 pourrait être différentes de celles du fond 32. En outre, dans cette variante particulière de la figure 2, la totalité de la surface du fond 8 se trouve en vis-à-vis sensiblement de la totalité de la surface de l'autre fond 32. Cette caractéristique n'est toutefois pas limitative de l'invention, et dans une autre variante les deux logements L1, L2 peuvent être rabattus l'un vers l'autre en configuration de transport, avec les fonds 8, 32 des plateaux 1,2 qui sont positionnés en face l'un de l'autre en étant décalés l'un rapport à l'autre de telle sorte qu'une partie seulement de l'un des fonds se trouve en vis-à-vis de l'autre fond ou d'une partie de l'autre fond.

Dans la variante particulière de la figure 2, lorsque les deux logements L1, L2 sont rabattus l'un vers l'autre avec les fonds 8, 32 des plateaux 1, 2 positionnés en face l'un de l'autre (configuration de transport), lesdits fonds 8 ,32 sont positionnés dans des plans différents et parallèles. Cette caractéristique n'est toutefois pas limitative de l'invention, et dans une autre variante les fonds 8 et 32 pourraient en configuration de transport ne pas être positionnés parallèlement l'un à l'autre, mais être légèrement inclinés l'un par rapport à l'autre.

Dans une autre variante de réalisation, la configuration de transport peut également être obtenue en rabattant l'un vers l'autre les deux logements L1, L2 autour de l'axe A, de telle sorte que les fonds 8, 32 des plateaux 1,2 sont positionnés en face l'un de l'autre, mais avec les faces internes 8b, 32b (et non plus externes) des fonds des plateaux 1, 2 en regard l'une de l'autre, la couverture 3 étant dans ce cas repliée sur elle-même et interposée entre lesdites faces internes 8b, 32b. Dans cette variante, en configuration de transport, la couverture 3 permet d'éviter un contact direct entre les éléments contenus dans un logement L1 et les éléments contenus dans l'autre logement L2.

Dans la variante de réalisation illustrée sur les figures, la couverture 3 qui relie les deux plateaux 1,2 dans la configuration intermédiaire et dans la configuration de transport permet cette mobilité en rotation des deux plateaux 1,2 autour de l'axe A.

Dans la configuration de transport, la courbure des câbles 9 suit la courbure de la liaison souple 4 et passe au dessus des deux rabats latéraux 12, 13. Ce guidage des câbles 9 permet avantageusement de réduire leur encombrement, comparativement à une solution dans laquelle les câbles ne seraient pas guidés par une liaison souple entre les deux logements L1 et L2 ou à une solution dans laquelle les câbles seraient guidés par une liaison souple positionnée au niveau des fonds des plateaux et non pas au dessus des rabats latéraux. En outre, dans la configuration de transport, la liaison souple 4 permet un guidage des câbles 9, sans exercer de tension sur les câbles 9. Ainsi, le passage de la configuration intermédiaire à la configuration de transport (et vice versa) peut avantageusement être réalisé sans déconnecter les éléments de l'équipement.

Dans la configuration de transport, on retrouve les deux mêmes logements L1, L2 que pour la configuration intermédiaire, mais avec des orientations différentes. En outre, dans la configuration de transport illustrée sur la figure 2, les éléments de l'équipement contenus dans le logement L1 ne sont pas en contact direct avec les éléments de l'équipement contenus dans l'autre logement L2, mais sont séparés par les deux fonds 8 et 32 des plateaux 1, 2. Il en résulte avantageusement une meilleure protection de ces éléments contre les chocs en cours de transport

Selon une caractéristique additionnelle et facultative de l'invention, le fond 32 du deuxième plateau 2, illustré à la figure 3, comporte des moyens de levage intégrés 24. Ces moyens de levage 24 comportent une poche gonflable 24, qui est logée dans une cavité ménagée dans la face externe 32a du fond 32 du plateau 2, et qui permet de lever et/ou incliner sans pièce mécanique le fond 32 de ce deuxième plateau 2, de façon à régler la hauteur et/ou l'inclinaison de ce fond 32. Lorsque le fond 32 du plateau 2 supporte un vidéoprojecteur 15, cette poche gonflable permet ainsi de régler la hauteur du vidéoprojecteur 15.

Plus particulièrement, cette poche 24a, qui est située sous le plateau 2, est reliée à des moyens de gonflage manuel comportant un tuyau qui passe au travers du plateau 2, qui est relié à une extrémité à la poche 24a, et qui se termine à son autre extrémité par une poire de gonflage accessible au niveau de la face interne 32b du fond du plateau 2. Ladite poche 24a peut ainsi être plus ou moins remplie d'air en actionnant la poire, de manière à augmenter ou diminuer la quantité d'air sous pression dans la poche 24a. Le gonflement de cette poche 24a permet lever et/ou incliner le plateau 2 dans la configuration d'utilisation par rapport au support plan sur lequel est posé le plateau 2.

La structure pour le transport et l'utilisation de l'équipement multimédia comprend un organe de préhension tel qu'une poignée 20 pour faciliter sa manipulation et son transport. Dans la variante de réalisation illustrée sur les figures 2, 4 et 5, cette poignée 20 est fixée sur la face externe 3a de la couverture 3, au niveau d'une zone intermédiaire de la couverture entre les deux plateaux 1,2. La face externe 3a de la couverture est la face qui est opposée à la face interne 3b (figure 1), laquelle face interne 3b est celle qui est orientée vers les faces internes 8b, 32b des fonds 8, 32 des plateaux 1, 2, lorsque la structure est dans la configuration de transport ou dans la configuration intermédiaire.

Dans une autre variante de réalisation, la poignée 20 peut ne pas être fixée à la couverture 3, mais l'organe de préhension 20 peut par exemple être constitué d'au moins une poignée fixée à l'un des plateaux 1, 2. Plus particulièrement encore, l'organe de préhension 20 peut comporter deux poignées qui sont fixées respectivement sur les faces externes des rabats 12, 13 des plateaux 1, 2, et qui passent à travers une ouverture ménagée dans la couverture 3, lorsque la structure est dans la configuration intermédiaire ou dans la configuration de transport.

En référence aux figures 2, 4 et 5, et de manière facultative, les rabats des plateaux 1, 2 comprennent des moyens de fermeture 21, 22 supplémentaires permettant de renforcer la fermeture de la structure dans sa configuration de transport.

Selon une caractéristique additionnelle de l'invention, chaque plateau 1,2 comporte des moyens de fixation permettant d'attacher de manière amovible des éléments d'un équipement sur la face interne 8b , 32b du fond 8, 32 des plateaux 1,2. La structure de l'invention permet ainsi un agencement modulaire et offre la possibilité de modifier l'arrangement des éléments de l'équipement à l'intérieur des plateaux.

Ces moyens de fixation sont repositionnables, et présentent de préférence une structure bouclettes/crochets, de type VELCRO®. Ces moyens de fixation sont constitués par exemple par des bandes auto-agrippantes 27, 27' ou équivalent (figure 1) ayant une structure de type bouclettes (respectivement de type crochets) qui sont fixées sur la face interne 8b, 32b du fond 8, 32 de chaque plateau 1,2, et qui sont aptes à coopérer avec des éléments d'accrochage 27" qui ont une structure de type crochets (respectivement de type bouclettes) et qui sont fixés sous les éléments de l'équipement que l'on souhaite accrocher sur le fond d'un plateau.

Plus particulièrement, les deux plateaux 1, 2 comportent en leur surface intérieure et en particulier sur les faces intérieures 8b, 32b de leurs fonds 8, 32 un mixte d'au moins deux catégories de bandes auto-agrippantes 27, 27' se différenciant par leur capacité d'adhésion. Ces bandes 27, 27' permettent d'attacher, de manière amovible, tous les éléments contenus dans ces plateaux à la face interne 8b, 32b de leur fond 8,32 respectif, quelle que soit la configuration de la structure (utilisation/intermédiaire/transport).

Les éléments peuvent ainsi être fixés aux plateaux 1, 2 avec des forces différentes en fonction de leur poids et de l'utilisation prévue.

De plus ces éléments, quels qu'ils soient, peuvent être organisés, agrippés et câblés, quelle que soit la configuration de la structure (utilisation/intermédiaire/transport), à partir du moment où la surface des éléments reste inférieure à la surface du fond des plateaux.

Ces bandes 27, 27' présentent à la fois une bonne capacité pour attacher ces éléments et une bonne facilité à les détacher afin que ces éléments puissent être facilement extraits de l'équipement 31.

Les bandes 27' ayant une forte capacité d'adhésion ont par exemple en moyenne une largeur de 3 centimètres, permettant d'attacher très solidement des éléments qui n'ont pas vocation à être extraits régulièrement comme par exemple le vidéoprojecteur 15.

Les bandes 27 ayant une moins forte capacité d'adhésion ont par exemple en moyenne une largeur de 5 centimètres, permettant d'attacher à l'inverse des éléments qui sont régulièrement extraits de l'équipement 31.

Ainsi, les éléments sont attachés directement à la surface intérieure des plateaux par l'intermédiaire de ces bandes.

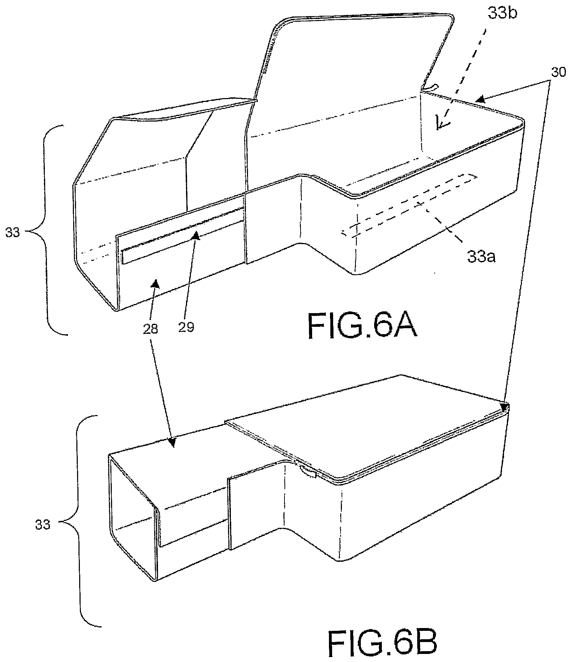

Les éléments peuvent aussi être attachés indirectement à la surface intérieure de ces plateaux à partir de poches 33 amovibles munies de fonds auto-aggrippants. De telles poches 33 présentent plus particulièrement une ouverture 33b par le dessus (figure 6A) pour pouvoir y introduire facilement le matériel. De manière optionnelle, une poche 33 peut également comporter une ouverture 33a sur le dessous, afin de permettre le passage d'un ou plusieurs câbles 9, de telle sorte qu'un élément de l'équipement puisse être rangé dans la poche tout en étant pré-câblé. Une poche peut avoir une structure rigide, le cas échéant avec des compartiments, tel que cela est illustré sur les figures 6A et 6B, ou peut être constituée par une sacoche souple dont l'ouverture sur le dessus peut par exemple être fermée au moyen d'une fermeture à glissière ou équivalent

Les éléments de l'équipement peuvent aussi être attachés aux fonds 32 auto-agrippants par tout autre moyen auto-agrippant. De façon non exhaustive, les moyens auto-agrippants peuvent comporter des élastiques tendeurs qui sont munis d'extrémités auto-agrippantes, et qui sont destinés à maintenir des éléments en position d'utilisation, par exemple pour le chargeur de piles 18, de façon à ce que l'élément soit directement en position d'utilisation lorsque la structure est dans la configuration d'utilisation de la figure 1, sans qu'aucune extraction de l'élément ne soit nécessaire ; les moyens auto-agrippants peuvent également comporter des passe-câbles muni d'une extrémité auto-aggripante pour guider les câbles au sein des plateaux ou des bandes auto-agrippantes autocollantes collées sous les éléments, tel que par exemple la bande 27" collés sous le vidéoprojecteur 15 sur la figure 1.Sur les figures 6A et 6B est illustrée une poche amovible spécifique 33 respectivement en position ouverte et fermée. Cette poche 33 est destinée à être placée « à l'arrière » d'un ou des deux plateaux et peut contenir des câbles ou encore tous outils ou moyens pouvant être utilisés avec le terminal, ou encore comme vide poche. Cette poche 33 de rangement est munie d'une ou de plusieurs fentes 33a de façon à pouvoir être utilisée pour le câblage des moyens de diffusion. Elle présente une ouverture latérale pour permettre aux câbles de passer vers la liaison souple 4 entre les plateaux. Elle comprend aussi des moyens d'ouverture/fermeture 30 pour pouvoir y inclure facilement les différents éléments et un fond auto-agrippant.

Le module 28 de cette poche comprend une bande auto-agrippante 29 pouvant adhérer avec une autre bande pour sa fermeture. La poche 33 peut être souple ou rigide et comprend à la surface extérieure de son fond des bandes auto-agrippantes aptes à adhérer aux bandes auto-agrippantes 27, 27' du fond des plateaux 1,2.

D'autres types de poches munies d'un fond anti-agrippant peuvent être compris dans l'équipement. Ces poches comprennent une ouverture permettant d'y insérer un élément et une fente en son fond pour le passage des câbles relatifs audit élément. En particulier, ces poches comprennent une fente sur le dessous et peuvent être ouvertes sur le dessus.

Les plateaux 1,2 sont de préférence réalisés en un matériau rigide et léger conférant à l'équipement un poids minimal pour une solidité optimale.

L'intérieur des deux plateaux 1,2 peut être thermoformé ou encore réalisé en une matière caoutchouteuse du type bibonde. Ces plateaux comprennent des compartiments comportant des moyens d'ouverture/fermeture, ainsi que des moyens de rétention tels que des tenseurs comprenant une bande auto-agrippante, en leur extrémité, destinés à attacher/détacher les éléments. Les câbles et/ou les éléments compris dans l'équipement sont attachés à partir de poches, de tenseurs élastiques, de passe-câbles, de bandes auto-adhésives de type Velcro™.

L'équipement portable qui vient d'être décrit comporte une fonctionnalité modulaire permettant d'obtenir tous les arrangements possibles d'éléments, dès que la somme des surfaces de ces différents éléments est inférieure à la surface disponible dans les plateaux. Cette fonctionnalité modulaire permet dans la fabrication de concevoir un seul modèle généraliste de structure de transport et d'utilisation d'un équipement, laquelle structure est adaptable à tout type d'équipement, ce qui engendre de nombreux avantages dans le cadre de sa production en série et permet de réduire le coût de fabrication de ladite structure.

L'invention n'est pas limitée à la structure particulière qui est représentée sur les figures annexées, mais couvre toute structure entrant dans le champ de protection des revendications annexées. En particulier, et de manière non exhaustive, dans d'autres variantes de réalisation de l'invention, les deux plateaux 1, 2 peuvent être indépendants et ne pas être reliés entre eux par une liaison souple 4 ; la couverture 3 peut être totalement amovible par rapport aux plateaux 1, 2 ; un plateau 1 ou 2 peut ne pas comporter de rabats latéraux mais être constitué uniquement d'un fond 8 ou 32.

L'invention trouve avantageusement son application au transport et à l'utilisation d'un équipement multimédia portable comportant notamment des moyens de diffusion informatique/audio/vidéo, tel qu'un vidéoprojecteur, un terminal portable,..., qui sont aptes à être interconnectés au moyen de câbles électriques 9. L'invention n'est toutefois pas limitée à ce seul type d'équipement portable, mais peut plus généralement être mise en oeuvre pour transporter et utiliser tout équipement comportant des éléments interconnectables au moyen de liaison filaires qui permettent notamment de transporter de l'information ou de l'énergie d'un élément à l'autre, tels que par exemple des câbles de connexion électriquement conducteurs, des fibres optiques, etc...La structure de l'invention peut également être utilisée pour transporter et utiliser un équipement portable dont les éléments ne sont pas nécessairement interconnectés, mais sont aptes à être utilisés de façon autonome sans interconnexion filaire.

## Revendications

1. Structure pour le transport et l'utilisation d'un équipement portable, ledit équipement portable comportant plusieurs éléments, ladite structure comportant :
- deux plateaux (1,2), qui comportent chacun un fond (8,32) destiné à servir de support à un ou plusieurs éléments de l'équipement, chaque fond (8, 32) comportant une face externe (8a, 32a) et une face interne (8b, 32b) qui est destinée à être orientée vers le ou lesdits éléments,
- une couverture (3),
- des moyens de liaison de la couverture (3) avec lesdits plateaux (1,2),
ladite structure étant configurable dans au moins trois configurations, à savoir :
- une configuration, dite de transport, dans laquelle la couverture (3) est solidaire des deux plateaux (1,2) et couvre chaque face interne (8b, 32b) de chaque plateau (1,2), de manière à former, avec au moins chaque face interne (8b, 32b) de chaque plateau (1,2), au moins deux logements (L1, L2) qui sont aptes à contenir les éléments dudit équipement, et qui sont en position rabattue l'un vers l'autre, avec les fonds (8, 32) des plateaux (1,2) positionnés en face l'un de l'autre,
- une configuration, dite intermédiaire, dans laquelle la couverture (3) est solidaire des deux plateaux (1,2) et forme avec chaque plateau (1,2) les deux mêmes logements (L1, L2) que pour la configuration de transport, mais dans laquelle les plateaux (1, 2) sont positionnés l'un par rapport à l'autre de telle sorte que les faces externes (8a, 32a) des fonds (8, 32) des plateaux (1,2) peuvent être posées sur un même support plan, et
- une configuration, dite d'utilisation, dans laquelle les plateaux (1,2) sont dans la même position que pour la configuration intermédiaire, et dans laquelle la couverture (3) est désolidarisée au moins partiellement des deux plateaux, de telle sorte que les faces internes (8b, 32b) des fonds (8, 32) des plateaux (1, 2) sont découvertes et directement accessibles,
ladite structure permettant en outre, dans les trois configurations, le passage d'une ou plusieurs liaisons filaires (9) d'un plateau (1) à l'autre (2) pour la connexion d'un ou plusieurs éléments supportés par la face interne (8b) du fond (8) d'un plateau (1) avec un ou plusieurs autres éléments supportés par la face interne (32b) du fond (32) de l'autre plateau (2).

2. Structure selon la revendication 1, dans laquelle les faces externes (8a, 32a) des fonds des plateaux (1,2) sont en regard l'une de l'autre lorsque la structure est en configuration de transport

3. Structure selon la revendication 1 ou 2, dans laquelle les deux plateaux sont mobiles en rotation autour d'un axe (A) et le passage de la configuration de transport à la configuration intermédiaire, et réciproquement, est obtenu par simple rotation des deux plateaux autour dudit axe, sans détacher la couverture (3).

4. Structure selon la revendication 3, dans laquelle ladite couverture (3) relie les deux plateaux (1,2) entre eux dans la configuration de transport et dans la configuration intermédiaire, et permet la rotation des deux plateaux (1,2) autour dudit axe (A), afin de permettre le passage de la configuration de transport à la configuration intermédiaire, et réciproquement sans détacher la couverture (3).

5. Structure selon l'une quelconque des revendications 1 à 4, dans laquelle les plateaux (1,2) sont reliés par un moyen de liaison souple (4) dans les trois configurations.

6. Structure selon la revendication 5, dans laquelle ledit moyen de liaison souple (4) permet, dans la configuration d'utilisation, d'ajuster l'orientation dans un même plan des fonds (8, 32) des deux plateaux (1,2) l'un par rapport à l'autre.

7. Structure selon l'une quelconque des revendications 5 ou 6, dans laquelle ledit moyen de liaison souple (4) permet un guidage d'une ou plusieurs liaisons filaires d'un plateau (1) à l'autre (2).

8. Structure selon la revendication 7, dans laquelle ledit moyen de liaison souple (4) permet un guidage d'une ou plusieurs liaisons filaires d'un plateau (1) à l'autre (2), de telle sorte qu'une fois le ou les éléments d'un plateau (1) connectés, au moyen de ladite ou desdites liaisons filaires, avec un ou plusieurs éléments de l'autre plateau (2), lesdits éléments restent connectés entre eux lors du passage de la configuration de transport à la configuration intermédiaire et réciproquement, ainsi que lots du passage de la configuration intermédiaire à la configuration d'utilisation, et réciproquement.

9. Structure selon l'une quelconque des revendications 7 ou 8, dans laquelle le moyen de liaison souple (4) forme une gaine souple dont les deux extrémités sont ouvertes et qui est apte à être traversée par une ou plusieurs liaisons filaires.

10. Structure selon l'une quelconque des revendications 1 à 9, dans laquelle chaque plateau (1,2) comporte en outre un ou plusieurs rabats latéraux sur la périphérie de son fond, les logements (L1, L2) de la structure dans la configuration de transport et dans la configuration intermédiaire étant délimités par la couverture (3), la face interne (8b, 32b) du fond de chaque plateau (1,2) et les rabats latéraux de chaque plateau (1,2).

11. Structure selon la revendication 10, dans laquelle un: plateau (1) comporte un rabat latéral (12), qui est positionné en regard d'un rabat latéral (13) de l'autre plateau (2) lorsque la structure est dans la configuration intermédiaire et dans la configuration d'utilisation, et en ce que chacun desdits rabats (12, 13) comporte une découpe (23) permettant le passage d'au moins une liaison filaire (9) d'un plateau à l'autre dans les trois configurations de la structure.

12. Structure selon l'une quelconque des revendications 1 à 11, dans laquelle le fond (32) de l'un (2) des deux plateaux (1,2) est pourvu de moyens de levage intégrés (24).

13. Structure selon la revendication 12, dans laquelle les moyens de levage (24) intégrés comportent une poche gonflable (24a) appliquée contre la face externe (32a) du fond (32) du plateau (2).

14. Structure selon l'une quelconque des revendications 1 à 13, et équipement portable comportant au moins deux éléments (7, 10, 14, 15, 16, 17, 18), un ou plusieurs éléments de l'équipement étant positionnés dans un des logements (L1) de la structure en configuration de transport ou intermédiaire, et un ou plusieurs autres éléments de l'équipement étant positionnés dans l'autre logement (L2) de la structure en configuration de transport ou intermédiaire, dans lesquels un ou plusieurs éléments d'un logement (L1) sont connectés, au moyen d'une ou plusieurs liaisons filaires (9), avec un ou plusieurs éléments de l'autre logement, lesdits éléments restant connectés entre eux lors du passage de la configuration de transport à la configuration intermédiaire et réciproquement, ainsi que lors du passage de la configuration intermédiaire à la configuration d'utilisation, et réciproquement.

15. Structure et équipement selon la revendication 14, dans lesquels l'équipement est un équipement multimédia portable.

16. Structure et équipement selon l'une quelconque des revendications 14 ou 15, dans lesquels l'équipement comporte un vidéoprojecteur (15) contenu dans un logement (L1) de la structure et un terminal (14) contenu dans l'autre logement (L2) de la structure.

## Patentansprüche

1. **Struktur zum Transportieren und Verwenden einer tragbaren Einrichtung,** wobei die tragbare Einrichtung mehrere Elemente enthält, wobei die Struktur enthält:
- zwei Auflageplatten (1, 2), die jeweils einen Boden (8, 32) aufweisen, der dazu bestimmt ist, als Träger für ein oder mehrere Elemente der Einrichtung zu dienen, wobei jeder Boden (8, 32) eine Außenseite (8a, 32a) und eine Innenseite (8b, 32b) enthält, die dazu bestimmt ist, zu dem bzw. den Elementen hin ausgerichtet zu werden,
- eine Abdeckung (3),
- Verbindungsmittel zum Verbinden der Abdeckung (3) mit den Auflageplatten (1, 2),
wobei die Struktur in zumindest drei Konfigurationen konfigurierbar ist, nämlich:
- eine sogenannte Transportkonfiguration, in welcher die Abdeckung (3) fest mit den beiden Auflageplatten (1, 2) verbunden ist und jede Innenseite (8b, 32b) jeder Auflageplatte (1, 2) überdeckt, so dass mit zumindest jeder Innenseite (8b, 32b) jeder Auflageplatte (1, 2) zumindest zwei Aufnahmen (L1, L2) gebildet werden, die dazu geeignet sind, die Elemente der Einrichtung zu beinhalten und die in aufeinander zu umgelegter Position sind, wobei die Böden (8, 32) der Auflageplatten (1, 2) einander gegenüberliegend positioniert sind,
- eine sogenannte Zwischenkonfiguration, in welcher die Abdeckung (3) fest mit den beiden Auflageplatten (1, 2) verbunden ist und mit jeder Auflageplatte (1, 2) die beiden gleichen Aufnahmen (L1, L2) wie bei der Transportkonfiguration bildet, in welcher jedoch die Auflageplatten (1, 2) so zueinander positioniert sind, dass die Außenseiten (8a, 32a) der Böden (8, 32) der Auflageplatten (1, 2) auf einen gleichen ebenen Träger gesetzt werden können, und
- eine sogenannte Verwendungskonfiguration, in welcher die Auflageplatten (1, 2) in der gleichen Position wie bei der Zwischenkonfiguration sind und in welcher die Abdeckung (3) zumindest teilweise von den beiden Auflageplatten gelöst ist, so dass die Innenseiten (8b, 32b) der Böden (8, 32) der Auflageplatten (1, 2) aufgedeckt und direkt zugänglich sind,
wobei die Struktur ferner in den drei Konfigurationen den Übergang von einer oder mehreren Drahtverbindungen (9) einer Auflageplatte (1) zur anderen (2) für die Verbindung von einem oder mehreren Elementen, die von der Innenseite (8b) des Bodens (8) einer Auflageplatte (1) getragen werden, mit einem oder mehreren weiteren Elementen gestattet, die von der Innenseite (32b) des Bodens (32) der anderen Auflageplatte (2) getragen werden.

2. Struktur nach Anspruch 1, wobei die Außenseiten (8a, 32a) der Böden der Auflageplatten (1, 2) einander gegenüberliegen, wenn die Struktur in Transportkonfiguration ist.

3. Struktur nach Anspruch 1 oder 2, wobei die beiden Auflageplatten um eine Achse (A) drehbar sind und der Übergang von der Transportkonfiguration in die Zwischenkonfiguration und umgekehrt durch einfaches Drehen der beiden Auflageplatten um die Achse erreicht wird, ohne die Abdeckung (3) zu lösen.

4. Struktur nach Anspruch 3, wobei die Abdeckung (3) die beiden Auflageplatten (1, 2) in der Transportkonfiguration und in der Zwischenkonfiguration miteinander verbindet und die Drehung der beiden Auflageplatten (1, 2) um die Achse (A) gestattet, um den Übergang von der Transportkonfiguration in die Zwischenkonfiguration und umgekehrt zu gestatten, ohne die Abdeckung (3) zu lösen.

5. Struktur nach einem der Ansprüche 1 bis 4, wobei die Auflageplatten (1, 2) in den drei Konfigurationen über ein nachgiebiges Verbindungsmittel (4) verbunden sind.

6. Struktur nach Anspruch 5, wobei das nachgiebige Verbindungsmittel (4) in der Verwendungskonfiguration gestattet, die Ausrichtung der Böden (8, 32) der beiden Auflageplatten (1, 2) in einer gleichen Ebene einander anzupassen.

7. Struktur nach einem der Ansprüche 5 oder 6, wobei das nachgiebige Verbindungsmittel (4) eine Führung von einer oder mehreren Drahtverbindungen von einer Auflageplatte (1) zur anderen (2) gestattet.

8. Struktur nach Anspruch 7, wobei das nachgiebige Verbindungsmittel (4) eine Führung von einer oder mehreren Drahtverbindungen von einer Auflageplatte (1) zur anderen (2) gestattet, so dass dann, wenn das Element bzw. die Elemente einer Auflageplatte (1) mittels der Drahtverbindung bzw. Drahtverbindungen mit einem oder mehreren Elementen der anderen Auflageplatte (2) verbunden sind, die Elemente beim Übergang von der Transportkonfiguration in die Zwischenkonfiguration und umgekehrt sowie beim Übergang von der Zwischenkonfiguration in die Verwendungskonfiguration und umgekehrt miteinander verbunden bleiben.

9. Struktur nach einem der Ansprüche 7 oder 8, wobei das nachgiebige Verbindungsmittel (4) einen nachgiebigen Mantel bildet, von dem beide Enden offen sind und der dazu geeignet ist, von einer oder mehreren Drahtverbindungen durchsetzt zu werden.

10. Struktur nach einem der Ansprüche 1 bis 9, wobei jede Auflageplatte (1, 2) ferner eine oder mehrere seitliche Umschlagklappen am Umfang ihres Bodens aufweist, wobei die Aufnahmen (L1, L2) der Struktur in der Transportkonfiguration und in der Zwischenkonfiguration von der Abdeckung (3), der Innenseite (8b, 32b) des Bodens jeder Auflageplatte (1, 2) und den seitlichen Umschlagklappen jeder Auflageplatte (1, 2) begrenzt werden.

11. Struktur nach Anspruch 10, wobei eine Auflageplatte (1) eine seitliche Umschlagklappe (12) enthält, die einer seitlichen Umschlagklappe (13) der anderen Auflageplatte (2) gegenüberliegend positioniert ist, wenn die Struktur in der Zwischenkonfiguration und in der Verwendungskonfiguration ist, und dass jede der Umschlagklappen (12, 13) einen Ausschnitt (23) aufweist, der in den drei Konfigurationen der Struktur den Übergang zumindest einer Drahtverbindung (9) von einer Auflageplatte zur anderen gestattet.

12. Struktur nach einem der Ansprüche 1 bis 11, wobei der Boden (32) der einen (2) der beiden Auflageplatten (1, 2) mit integrierten Hebemitteln (24) versehen ist.

13. Struktur nach Anspruch 12, wobei die integrierten Hebemittel (24) eine aufblasbare Tasche (24a) enthalten, die an die Außenseite (32a) des Bodens (32) der Auflageplatte (2) angelegt ist.

14. Struktur nach einem der Ansprüche 1 bis 13 und tragbare Einrichtung mit zumindest zwei Elementen (7, 10, 14, 15, 16, 17, 18), wobei ein oder mehrere Elemente der Einrichtung in einer der Aufnahmen (L1) der Struktur in Transport- bzw. Zwischenkonfiguration positioniert sind, und ein oder mehrere weitere Elemente der Einrichtung in der weiteren Aufnahme (L2) der Struktur in Transport- bzw. Zwischenkonfiguration positioniert sind, wobei ein oder mehrere Elemente einer Aufnahme (L1) mittels einer oder mehrerer Drahtverbindungen (9) mit einem oder mehreren Elementen der weiteren Aufnahme verbunden sind, wobei die Elemente beim Übergang von der Transportkonfiguration in die Zwischenkonfiguration und umgekehrt sowie beim Übergang von der Zwischenkonfiguration in die Verwendungskonfiguration miteinander verbunden bleiben.

15. Struktur und Einrichtung nach Anspruch 14, wobei die Einrichtung eine tragbare Multimedia-Einrichtung ist.

16. Struktur und Einrichtung nach einem der Ansprüche 14 oder 15, wobei die Einrichtung einen Videoprojektor (15) aufweist, der in einer Aufnahme (L1) der Struktur enthalten ist, sowie ein Endgerät (14), das in der anderen Aufnahme (L2) der Struktur enthalten ist.

## Claims

1. Structure for the transport and utilisation of portable equipment, said portable equipment including several elements, said structure comprising:
- two trays (1, 2), each having a base (8, 32) intended to serve as a support for one or more elements of the equipment, each base (8, 32) having an external face (8a, 32a) and an internal face (8b, 32b) which is intended to be orientated towards said element or elements,
- a cover (3),
- means for connecting the cover (3),with said trays (1, 2),
said structure being configurable in at least three configurations, namely:
- a configuration, called transport, in which the cover (3), forms one piece with the two trays (1, 2), and covers each internal face (8b, 32b) of each tray (1, 2), so as to form, with at least each internal face (8b, 32b) of each tray (1, 2), at least two housings (L1, L2) which are adapted to contain the elements of said equipment, and which are in a folded position relative to each other, with the bases (8, 32) of the trays (1, 2) facing each other,
- a configuration, called intermediary, in which the cover (3), forms one piece with the two trays (1, 2) and forms with each tray (1, 2), the same two housings (L1, L2) as for the transport configuration, but in which the trays (1, 2) are positioned relative to each other in such a way that the external faces (8a, 32a) of the bases (8, 32) of the trays (1, 2) may be positioned on the same support plane, and
- a configuration, called utilisation, in which the trays (1, 2) are in the same position as for the intermediary configuration, and in which the cover (3) is at least partially disengaged from the two trays in such a way that the internal faces (8b, 32b) of the bases (8, 32) of the trays (1, 2) are uncovered and directly accessible,
said structure further permitting, in the three configurations, the passage of one or several connecting cables (9) from one tray (1) to the other (2) for the connection of one or more elements supported by the internal face (8b) of the base (8) of the tray (1) with one or several other elements supported by the internal face (32b) of the base (32) of the other tray (2).

2. Structure according to claim 1, wherein the external faces (8a, 32a) of the bases of the trays (1, 2) are opposite each other when the structure is in the transport configuration.

3. Structure according to claim 1 or 2, wherein the two trays are rotatably movable about an axis (A) and the transition from the transport configuration to the intermediary configuration, and *vice versa,* is obtained by a simple rotation of the two trays about said axis, without detaching the cover (3).

4. Structure according to claim 3, wherein the cover (3) connects the two trays (1, 2) together in the transport configuration and in the intermediary configuration, and allows the rotation of the two trays about the axis (A), so as to permit the transition of the transport configuration to the intermediary configuration, and *vice versa,* without detaching the cover (3).

5. Structure according to any one of claims 1 to 4, wherein the trays (1, 2) are connected by flexible linkage (4) means in the three configurations.

6. Structure according to claim 5, wherein the flexible linkage means (4), permits, in the utilisation configuration, the adjustment of the orientation in the same plane of the bases (8,32) of the two trays (1, 2) relative to each other.

7. Structure according to claim 5 or 6, wherein the flexible linkage means (4) permits the passage of one or more connecting cables from one tray (1) to the other (2).

8. Structure according to claim 7, wherein the flexible linkage means (4) permits the passage of one or more connecting cables from one tray (1) to the other (2), in such a way that once the element or elements of a tray (1) are connected, by means of the said connecting cable or connecting cables, with one or several elements of the other tray (2), said elements remain connected together during the transition of the transport configuration to the intermediary configuration, and *vice versa*,in the same way as for the transition of the intermediary configuration to the utilisation configuration, and *vice versa.*

9. Structure according to claim 7 or 8, wherein the flexible linkage means (4) forms a flexible sheath, the two extremites of which are open and which is adapted to be traversed by one or more connecting cables.

10. Structure according to any one of claims 1 to 9, wherein each tray (1, 2) further comprises one or more side walls on the periphery of the base, the housings (L1, L2) of the structure in the transport configuration and in the intermediary configuration being determined by the cover (3), the internal face (8b, 32b) of the base of each platform (1, 2), and the side walls of each tray (1, 2).

11. Structure according to claim 10, wherein the tray (1) has a side wall (12), which is positioned relative to a side wall (13) of the other tray (2,) when the structure is in the intermediary configuration and in the utilisation configuration, and in that each of said side walls (12, 13) has a cut-out (23) which allows the passage of at least one connecting cable (9) from one tray to the other in the three configurations of the structure.

12. Structure according to any one of claims 1 to 11, wherein the base (32) of one (2) of the two trays (1, 2) is provided with integral raising means (24).

13. Structure according to claim 12, wherein the integral raising means (24) includes an inflatable bag (24a) attached to the external face (32a) of the base (32) of the tray (2).

14. Structure according to any one of claims 1 to 13, and portable equipment comprising at least two elements (7, 10, 14, 15, 16, 17, 18), one or more elements of equipment being positioned in one of the housings (L1) of the structure in the transport configuration or the intermediary configuration, and one or more elements of equipments being positioned in the other housing (L2) of the structure in the transport configuration or the intermediary configuration, wherein one or more elements of a housing (L1) are connected, by means of one or more connecting cables (9), with one or more elements of the other housing, said elements remaining connected together during the transition of the transport configuration to the intermediary configuration, and *vice versa,* in the same way as for the transition of the intermediary configuration to the utilisation configuration, and *vice versa.*

15. Structure according to claim 14, wherein the equipment is portable multimedia equipment.

16. Structure and equipment according to claim 14 or 15, wherein the equipment comprises a videoprojector (15) contained in the housing (L1) of the structure and a terminal (14) contained in the other housing (L2) of the structure.
